# EUROPEAN PATENT APPLICATION

(11) **EP 4 693 220 A1**
(43) Date of publication of application: **11.02.2026**
(21) Application number: 25190609.5
(22) Date of filing: 21.07.2025
(51) Int. Cl.: G06V 10/774

(54) **APPARATUS, METHOD, AND SYSTEM FOR PROVIDING SYMBIOTIC AUTONOMOUS TRAINING OF MACHINE LEARNING MODELS**

(30) Priority: 06.08.2024 FI 20245957
(71) Applicant: Nokia Solutions and Networks Oy, 02610 Espoo (FI)
(72) Inventor: KUSHNIR, Dan, Springfield, NJ (US); BOYD, Aidan, Hoboken, NJ (US); WANG, Zhiyi, Newark, NJ (US); MOHAJERI MOGHADDAM, Atefeh, Morristown, NJ (US)
(74) Representative: Richardt Patentanwälte PartG mbB

(57) **Abstract**

An approach is provided for symbiotic autonomous training of machine learning models. The approach involves, for example, receiving an output of a learner network. The learner network is configured to assign a predicted class of an object depicted in input data and predicted coordinates from which the object was captured in the input data. The input data is synthetic input data generated using a synthesizer network based on given coordinates. The approach also involves based on one or more decision criteria, performing at least one of: (1) using the input data to activate the synthesizer network to generate additional synthetic training data within the predicted class and within a threshold range of the given coordinates so that the learner network is further trained on the additional synthetic training data; or (2) causing, at least in part, a collection of additional generator ground truth data from the given coordinates so that the synthesizer network is further trained on the additional generator ground truth data.

## Description

### FIELD

The disclosed subject matter generally relates to autonomous machine learning and artificial intelligence.

### BACKGROUND

Training machine learning (ML) models is generally resource and data intensive. For example, a learner neural network (e.g., trained for image classification, object detection, etc.) may require substantial numbers of labeled training samples to make predictions at specified levels of accuracy. Because of this, the collection of labeled training samples (e.g., ground truth labeled images) traditionally can contribute significantly to the resource and data burden associated with ML model training. In response, synthesizer networks have been developed to generate synthetic training data for training the learner network to minimize manual data collection and labeling. However, model owners and developers still face significant technical challenges with respect to integrating learning networks with synthesizer network to train accurate ML models while minimizing resource burdens and manual intervention.

### SOME EXAMPLE EMBODIMENTS

Therefore, there is a need for providing symbiotic autonomous training of machine learning (ML) models (e.g., learner and synthesizer networks).

According to one example embodiment, an apparatus comprises means for receiving an output of a learner network that is configured to assign a predicted class of an object depicted in input data and predicted coordinates from which the object was captured in the input data. The input data is synthetic input data generated using a synthesizer network based on given coordinates, and/or possibly real images. The apparatus also comprises means for, based on one or more decision criteria, performing at least one of: (1) using the input data to activate the synthesizer network to generate additional synthetic training data within the predicted class and within a threshold range of the given coordinates so that the learner network is further trained on the additional synthetic training data; or (2) causing, at least in part, a collection of additional generator ground truth data from the given coordinates so that synthesizer network is further trained on the additional generator ground truth data.

According to another embodiment, an apparatus comprises at least one processor, and at least one memory storing instructions that, when executed by the at least one processor, cause the apparatus at least to receive an output of a learner network that is configured to assign a predicted class of an object depicted in input data and predicted coordinates from which the object was captured in the input data. The input data is synthetic input data generated using a synthesizer network based on given coordinates. The apparatus is also caused, based on one or more decision criteria, to perform at least one of: (1) using the input data to activate the synthesizer network to generate additional synthetic training data within the predicted class and within a threshold range of the given coordinates so that the learner network is further trained on the additional synthetic training data; or (2) causing, at least in part, a collection of additional generator ground truth data from the given coordinates so that synthesizer network is further trained on the additional generator ground truth data.

According to another embodiment, a method comprises receiving an output of a learner network that is configured to assign a predicted class of an object depicted in input data and predicted coordinates from which the object was captured in the input data. The input data is synthetic input data generated using a synthesizer network based on given coordinates. The method also comprises means for, based on one or more decision criteria, performing at least one of: (1) using the input data to activate the synthesizer network to generate additional synthetic training data within the predicted class and within a threshold range of the given coordinates so that the learner network is further trained on the additional synthetic training data; or (2) causing, at least in part, a collection of additional generator ground truth data from the given coordinates so that synthesizer network is further trained on the additional generator ground truth data.

According to another embodiment, a computer program comprising instructions which, when executed by an apparatus, cause the apparatus to receive an output of a learner network that is configured to assign a predicted class of an object depicted in input data and predicted coordinates from which the object was captured in the input data. The input data is synthetic input data generated using a synthesizer network based on given coordinates. The apparatus is also caused, based on one or more decision criteria, to perform at least one of: (1) using the input data to activate the synthesizer network to generate additional synthetic training data within the predicted class and within a threshold range of the given coordinates so that the learner network is further trained on the additional synthetic training data; or (2) causing, at least in part, a collection of additional generator ground truth data from the given coordinates so that synthesizer network is further trained on the additional generator ground truth data.

According to another embodiment, a computer program comprises instructions for causing an apparatus to receive an output of a learner network that is configured to assign a predicted class of an object depicted in input data and predicted coordinates from which the object was captured in the input data. The input data is synthetic input data generated using a synthesizer network based on given coordinates. The apparatus is also caused, based on one or more decision criteria, to perform at least one of: (1) using the input data to activate the synthesizer network to generate additional synthetic training data within the predicted class and within a threshold range of the given coordinates so that the learner network is further trained on the additional synthetic training data; or (2) causing, at least in part, a collection of additional generator ground truth data from the given coordinates so that synthesizer network is further trained on the additional generator ground truth data.

According to another embodiment, a non-transitory computer-readable storage medium comprising program instructions that, when executed by an apparatus, cause the apparatus to receive an output of a learner network that is configured to assign a predicted class of an object depicted in input data and predicted coordinates from which the object was captured in the input data. The input data is synthetic input data generated using a synthesizer network based on given coordinates. The apparatus is also caused, based on one or more decision criteria, to perform at least one of: (1) using the input data to activate the synthesizer network to generate additional synthetic training data within the predicted class and within a threshold range of the given coordinates so that the learner network is further trained on the additional synthetic training data; or (2) causing, at least in part, a collection of additional generator ground truth data from the given coordinates so that synthesizer network is further trained on the additional generator ground truth data.

According to one example embodiment, an apparatus comprises circuitry configured to receive an output of a learner network that is configured to assign a predicted class of an object depicted in input data and predicted coordinates from which the object was captured in the input data. The input data is synthetic input data generated using a synthesizer network based on given coordinates. The circuitry is also configured, based on one or more decision criteria, to perform at least one of: (1) using the input data to activate the synthesizer network to generate additional synthetic training data within the predicted class and within a threshold range of the given coordinates so that the learner network is further trained on the additional synthetic training data; or (2) causing, at least in part, a collection of additional generator ground truth data from the given coordinates so that synthesizer network is further trained on the additional generator ground truth data.

According to a further embodiment, a device comprises at least one processor; and at least one memory including a computer program code for one or more programs, the at least one memory and the computer program code configured to, with the at least one processor, cause the device to receive an output of a learner network that is configured to assign a predicted class of an object depicted in input data and predicted coordinates from which the object was captured in the input data. The input data is synthetic input data generated using a synthesizer network based on given coordinates. The device is also caused, based on one or more the predicted class uncertainty, the predicted coordinate uncertainty, or a combination thereof, to perform at least one of: (1) using the input data to activate the synthesizer network to generate additional synthetic training data within the predicted class and within a threshold range of the given coordinates so that the learner network is further trained on the additional synthetic training data; or (2) causing, at least in part, a collection of additional generator ground truth data from the given coordinates so that synthesizer network is further trained on the additional generator ground truth data.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

According to some aspects, there is provided the subject matter of the independent claims. Some further aspects are defined in the dependent claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The example embodiments of the invention are illustrated by way of examples, and not by way of limitation, in the figures of the accompanying drawings:
FIG. 1 is a diagram of a system capable of providing symbiotic autonomous training of machine learning (ML) models, according to one example embodiment;
FIG. 2 is a diagram of components of a training coach, according to one example embodiment;
FIG. 3 is a flowchart of a process for providing symbiotic autonomous training of ML models, according to one example embodiment;
FIG. 4 is a diagram of an ML architecture for providing symbiotic autonomous training of ML models, according to one example embodiment;
FIG. 5 is a diagram of example images for providing symbiotic autonomous training of ML models, according to one example embodiment;
FIG. 6 is a diagram of example coordinates for capturing samples for providing symbiotic autonomous training of ML models, according to one example embodiment;
FIGs. 7A and 7B are diagrams of example training images for training an ML model for image classification, according to one example embodiment;
FIG. 8 is a diagram of hardware that can be used to implement example embodiments; and
FIG. 9 is a diagram of a chip set that can be used to implement example embodiments.

### DESCRIPTION OF SOME EMBODIMENTS

Examples of a method, apparatus, and computer program for providing symbiotic autonomous training of machine learning (ML) models, according to one example embodiment, are disclosed in the following. In the following description, for the purposes of explanation, numerous specific details and examples are set forth to provide a thorough understanding of the embodiments of the invention. It is apparent, however, to one skilled in the art that the embodiments of the invention may be practiced without these specific details or with an equivalent arrangement. In other instances, structures and devices are shown in block diagram form to avoid unnecessarily obscuring the embodiments of the invention.

Reference in this specification to "one embodiment", "one example embodiment", "an "embodiment", or "an example embodiment" means that a particular feature, structure, or characteristic described in connection with the embodiment is included in at least one embodiment of the present disclosure. The appearance of the phrase "in one embodiment" or "in one example embodiment" in various places in the specification are not necessarily all referring to the same example embodiment, nor are separate or alternative example embodiments mutually exclusive of other embodiments. In addition, the embodiments described herein are provided by example, and as such, "one embodiment" can also be used synonymously as "one example embodiment." Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

As used herein, "at least one of the following: <a list of two or more elements>," "at least one of <a list of two or more elements>," "<a list of two or more elements> or a combination thereof," and similar wording, where the list of two or more elements are joined by "and" or "or", mean at least any one of the elements, or at least any two or more of the elements, or at least all the elements.

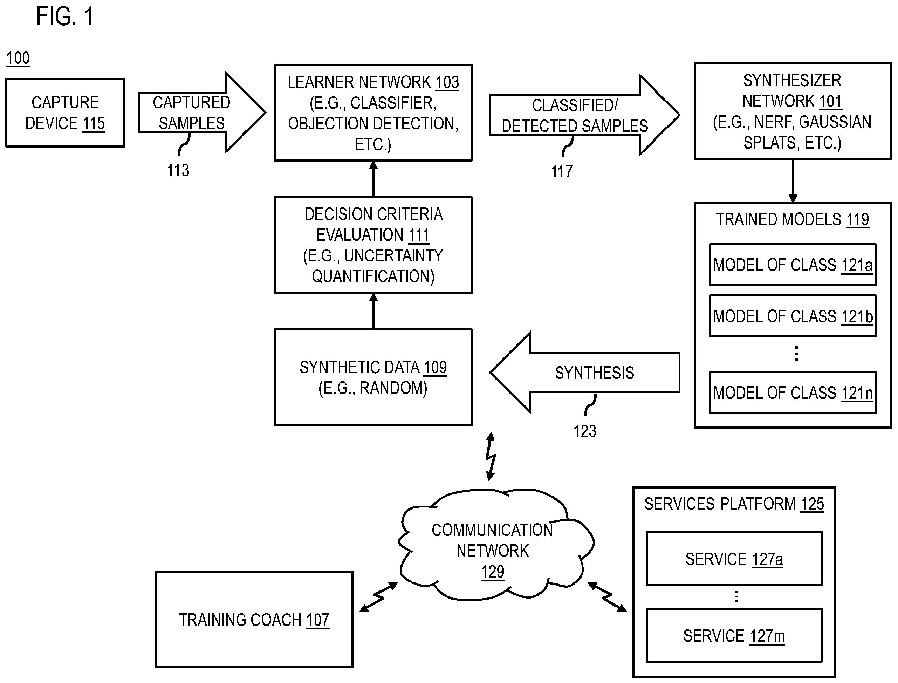

FIG. 1 is a diagram of a system capable of providing symbiotic autonomous training of machine learning (ML) models, according to one example embodiment. Training robust artificial intelligence (AI) models (also referred to as ML models), especially in applications such as computer vision, demands extensive volumes of varied data for training. However, acquiring such large, diverse, and appropriately labeled datasets from real-world images can be a daunting task. This is due to sheer volume of data required and the need for diversity in that data to train a robust ML model. For example, to achieve optimal performance (e.g., accurate classification, detection, or prediction results), these models necessitate potentially thousands of images or videos, and the quality of training data directly impacts the model's ability to classify visual information effectively.

Several factors contribute to the difficulty of obtaining suitable labeled datasets. For example, a suitable training dataset should have a diversity of viewpoints. A robust model should be able to recognize objects from various angles, distances, and perspectives, which necessitates a dataset that captures these variations. Another example factor is lighting conditions. Changes in lighting can drastically affect an object's appearance in images, requiring training data to encompass a wide range of lighting scenarios. Another example factor is variations within classes. Even objects belonging to the same category can exhibit significant visual differences. For instance, the "dog" category encompasses various breeds with diverse appearances, and the training data needs to reflect this diversity for accurate classification. Yet another example factor is occlusion. Real-world images often feature objects that are partially hidden, and models need to be trained to recognize objects even when they are not fully visible. Addressing these factors by manually collecting and labeling real-world data is a resource-intensive process, demanding significant time and effort.

Synthetic data generation emerges as a solution to this challenge by creating artificial yet realistic data to supplement or even replace real-world data in AI training. This approach helps overcome the limitations of limited real-world data, reduces the time and resources needed for manual data collection and annotation, and enables the development of AI models capable of generalizing to various real-world scenarios.

However, traditional synthetic data generators historically have not involved any two-way symbiotic mechanism that allows a generative model (e.g., a synthesize network 101) to train a task classifier (or any other type of learner network 103) while the task classifier (e.g., learner network 103) can also trigger training of the generative model (e.g., synthesizer network 101). For example, one reference is a Generative Adversarial Networks (GANs). In GANs, a generator synthesizes data, and receives feedback from a discriminator that improves its generation process. However, that process is typically targeting the creation of a better and better generator and not the improvement of the discriminator and the reduction of the data annotation and data collection effort. In other words, the main intention of GANs is to create realistic data samples from a generator without the symbiotic relationship discussed above. Moreover, the discriminator is aiming only at classifying real from synthetic data, and not on the actual content in the images.

Accordingly, there are significant technical challenges with respect to providing a symbiotic configuration of the learner network 103 and the synthesizer network 101 that can initiate autonomous training of each network without manual intervention or human involvement. For example, one of the technical challenges with implementing a learner network 103 that can also autonomously trigger the training of a synthesizer network 101 is to design a feedback mechanism that can measure the quality and usefulness of the synthetic data for the learning task. For example, the learner network 103 needs to evaluate how well the synthetic images match the real-world scenarios that it is trying to classify or segment. Moreover, the learner network 103 needs to communicate its evaluation to the synthesizer network 101 (and vice versa) in a way that can guide its generation process and avoid producing poor quality synthetic data.

To address these technical challenges, the system 100 of FIG. 1 introduces a capability to perform autonomous, simultaneous, and efficient symbiotic training of two types of AI models: (1) a task related learner network 103 (e.g., a classifier, detector, etc.) that indicates when a synthesizer network 101 needs additional training to generate higher quality training data , and (2) a data synthesizer network 101 that generates data to train the learner network 103 (e.g., for 3D scene construction, aka digital twin). In other words, in one embodiment, the system 100 includes the removal of human annotation effort from the training of the learner network 103 by using the synthesizer network 101 to generate training data for the learner network 103. In addition, the system 100 solves the problem of triggering the synthesizer network 101 to improve its training in light of the learner network 103's needs, and to avoid unnecessary training effort of the synthesizer network 101.

By way of example, this problem is prevalent in robots and other AI agents that are acting in a new scene on new tasks that they were not previously trained for. In this case human assistance in data labeling can be scarce or too slow. In this example scenario, the various embodiments described herein enable autonomous training of an agent to understand and sense the scene around it, and also to build efficiently its own digital twin of the scene around the agent. By way of example, a digital twin of a scene is a 3D representation of a physical environment that can be used to simulate and manipulate the appearance of the scene from different viewpoints and under different conditions. A digital twin of a scene can capture the geometry, texture, lighting, and dynamics of the real-world scene and enable realistic rendering of novel images. A digital twin of a scene can also serve as a data source for training AI models that need to understand and interact with the physical world.

In one embodiment, the invention provides a methodology for autonomous supervised training of AI models (e.g., learner network 103 and synthesizer network 101), and (as in the example above) a creation of a digital twin without human intervention. It leverages active learning and a mechanism (e.g., a training coach 107) that provides criteria to decide when data (e.g., synthetic data 109) should be generated by the synthesizer network 101 to train the learner network 103, or when should the synthesizer network 101 train itself to improve its data generation quality. Active learning, for instance, is a technique for training AI models that involves selecting the most informative data samples for annotation and model update. Active learning can reduce the amount of labeled data needed to achieve a desired level of performance, compared to passive learning methods that use random or predefined data samples. In the context of the various embodiments described herein, active learning is used to guide the data synthesizer network 101 to generate data samples (e.g., synthetic data 109) that are most beneficial for training the learner network 103 (e.g., based on decision criteria evaluation 111 that applies one or more decision criteria such as but not limited to determining data samples where classes or detected objects have prediction uncertainties above a threshold value), and to indicate when the data synthesizer network 101 needs to improve its own data generation quality (e.g., by training on more ground truth captured samples 113 collected from capture devices 115 (e.g., a camera in the case of image samples, microphone in the case of audio samples, etc.)

To train AI models in a supervised manner, humans generally need to annotate training data. Instead, the system 100 (e.g., via the training coach 107) uses the data synthesizer network 101 and guides it to synthesize only synthetic data 109 (e.g., data samples) that improve the learner network 103. In a context where the learner network 103 is trained for a classification task, the synthesizer network 101 can be trained on captured samples 113 to generate trained models 119 can include models 121a-121n for each class (also collectively referred to as models of class 121) that the learner network 103 can output. The trained models 119 can then be used for the synthesis of data samples that have been autonomously labeled using the learner network 103 to generate classified/detected samples 117 that represent ground truth data samples (e.g., training data) across a diversity of classes. During training of the synthesizer network 101, the trained models 119 can perform a synthesis 123 of the synthetic data 109, e.g., using corresponding models of class 121. On initialization of the learner network 103, the synthetic data 109 can be randomly generated to represent a diversity of classes from a diversity of viewpoints (e.g., coordinates corresponding to the simulated capture device 115, e.g., camera if the data comprise images or other spatial data).

In a context where the learner network 103 is trained to perform object detection and 3D localization of the detected object, the trained model 119 can instead include a scene model (not depicted). By way of example, a scene model is a representation of a 3D environment that can be used to generate synthetic data 109 for training the learner network 103. A scene model can capture the geometry, texture, lighting, and dynamics of the real-world scene and enable realistic rendering of novel images from different viewpoints and under different conditions. A scene model can also serve as a data source for training AI models that need to understand and interact with the physical world.

When the synthesizer network 101 synthesizes data, the resulting synthetic data 109 is naturally already labeled, hence why no human involvement is required. In one embodiment, simultaneously, and in a symbiotic manner, the training coach 107 is able to indicate to the synthesizer network 101 which views or training data need to be better sampled and trained for (e.g., views or training data that can be used to better train the synthesizer network 101). This focus can reduce dramatically the effort in training the synthesizer network 101, and in particular digital-twin-based synthesizers.

In summary, the various embodiments described herein provide a mechanism for autonomous training of AI/ML models (e.g., a neural network such as the learner network 103), and the data synthesizer network 101 (e.g., based on a Neural Radiance Field (NeRF), Gaussian Splats, and/or equivalent). By way of example, NeRF is a mechanism that can learn a rendering model of even a 3D map of a scene from videos/a set of 2D images, and then synthesize new images (e.g., 2D or 3D) of the scene from novel views. For example, the output of the NeRF pipeline can then be postprocessed in order to obtain a point cloud. Gaussian splatting (or splats), for instance, is a technique for rendering point clouds in a smooth and realistic way. Gaussian splatting involves assigning a Gaussian kernel to each point in the cloud, which determines its influence on the surrounding pixels. The kernels are then blended together using a weighted average, resulting in a continuous surface that preserves the details and colors of the original points. Gaussian splatting can also handle transparency and occlusion effects by adjusting the kernel weights according to the depth and opacity of the points. Gaussian splatting can improve the quality and efficiency of data synthesis using NeRF, as it can produce high-resolution images from sparse and noisy point clouds.

In one embodiment, the digital twins created by NeRF can be used to generate images with guidance from an active learner. Hence this various embodiments described herein address this ability to intelligently trigger the synthesizer network 101 to better train AI models (e.g., the learner network 103).

In one embodiment, the training coach 107 focuses on training the synthesizer network 101 on the training on data that is useful for the particular learning task at hand instead of sampling a big space in angles and particularities that are not necessary to the learning task at hand.

On the other hand, the training coach 107 can also detect images or other training samples generated by the synthesizer network 101 that are of bad quality based on one or more decision criteria applied via decision criteria evaluation 111 (e.g., when applying uncertainty sampling as one but not exclusive decision criterion, data samples can be classified as bad quality if they result in prediction uncertainties of the learner network 103 above threshold uncertainties). Other examples of decision criteria include but are not limited to a probability of prediction, a measure of how far the synthetic input data is from other training data samples, a closeness to a decision boundary, and/or any other equivalent criteria. Decision criteria evaluation 111 can signal to the synthesizer network 101 where collecting additional ground truth data can improve its trained models 119. Accordingly, the various embodiments described herein also address developing criteria for intelligently acquiring data (e.g., images, audio, text, etc.) for training the learner network 103, and for probing the synthesizer network 101's lack for training data.

This symbiotic relation between the synthesizer network 101 and the learner network 103 allows the training of the two models independently without human intervention in labeling data. In effect, the synthesizer network 101 is used to further the learner network 103's performance, which in turn can be used to highlight areas where the synthesizer network 101 can be improved.

In one embodiment, the system 100 can also improve the learner network 103 and synthesizer network 101 by reducing potentially wrong classifications and/or detections. One remediation mechanism for wrong classification/detections by the learner network 103 is to use multiple views or labels to correct the errors. For example, if the learner network 103 misclassifies an object in one view, it can compare its prediction with other views of the same object/scene or with other labels provided by the synthesizer network 101 or other external sources. If there is a discrepancy, the learner network 103 can either adjust its prediction or request more data from the synthesizer network 101 to resolve the ambiguity. This way, the learner network 103 can improve its accuracy and robustness by incorporating multiple perspectives and sources of information.

Another possible remediation mechanism is to use a large vision model to update the classes of the learner network 103. A large vision model is a pre-trained model that has learned from a large amount of data and can perform various vision tasks, such as image classification, object detection, segmentation, etc. The learner network 103 can use the large vision model as a teacher or a reference to update its own classes and learn from its mistakes. For example, if the learner network 103 detects an object that is not in its class set, it can query the large vision model to obtain a more specific or accurate label for the object and add it to its class set. Alternatively, if the learner network 103 detects an object that is in its class set but the large vision model disagrees, it can compare the features and representations of the object with the large vision model and update its own parameters accordingly. This way, the learner network 103 can leverage the knowledge and expertise of the large vision model to refine its own classes and detections.

Although the various embodiments described herein discuss a use case of the system 100 for digital twin creation, it is contemplated that the embodiments described herein can also be used for any other application that involves processing and understanding visual data from multiple sources. For example, the system 100 can be used for navigation, mapping, augmented reality, virtual reality, surveillance, security, entertainment, education, or any other domain that can benefit from the synthetic data generation and learning capabilities of the system 100. These applications, for instance, can be provided by a services platform 125 and/or one or more services 127a-127m (also collectively referred to as services 127) of the services platform 125 with connectivity to the output of the AI models (e.g., the learner network 103 and/or synthesizer network 101) over a communication network 129.

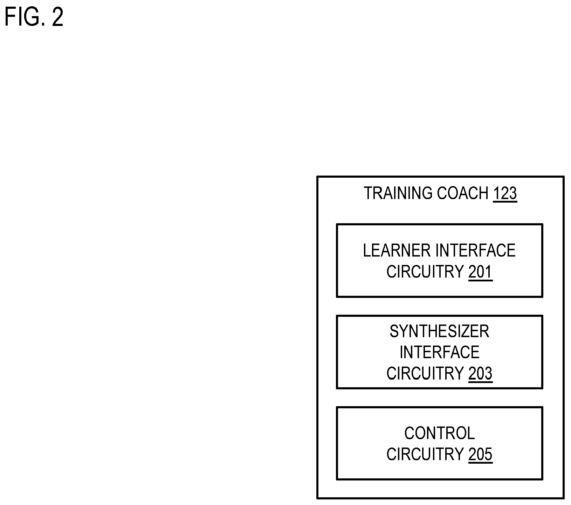

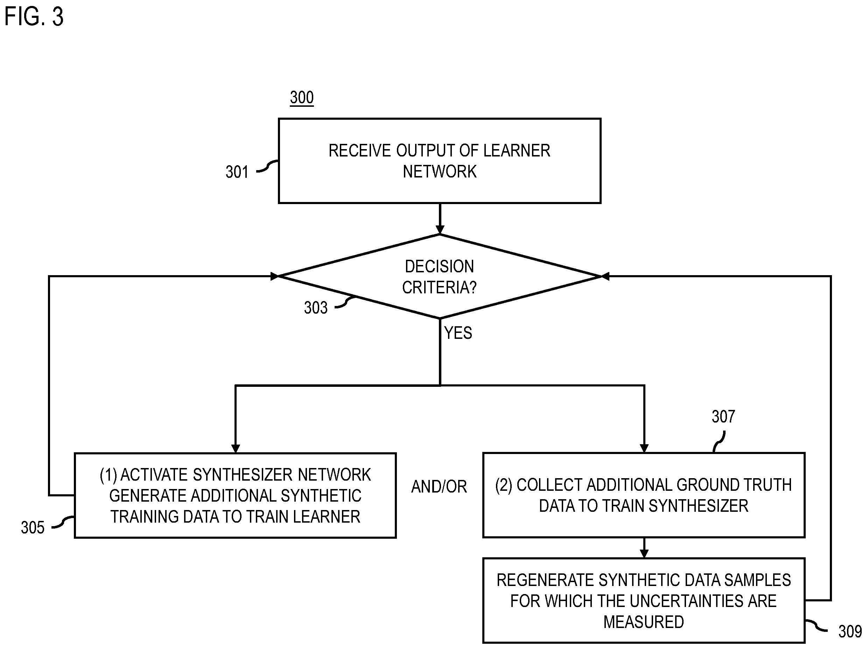

FIG. 2 is a diagram of components of the training coach 107, according to one example embodiment. In one embodiment, the training coach 107 performs the functions and methods associated with, and provides means for providing symbiotic autonomous training of the ML models (e.g., the learner network 103 and the synthesizer network 101) according to the various embodiments described herein. As shown in FIG. 2, the training coach 107 includes: (1) learner interface circuitry 201 for exchanging information with the learner network 103; (2) synthesizer interface circuitry 203 for exchanging information with the synthesizer network 101; and (3) control circuitry 205 for autonomously determining symbiotic training of the learner network 103 and synthesizer network 101 based on uncertainty quantification 111. It is contemplated that the functions of the components/circuitry of the training coach 107 described above may be combined or performed by other components or means of equivalent functionality. The above presented components comprise means for performing the various embodiments and can be implemented in a circuitry, a hardware, a firmware, a software, a chip set, or in any combination thereof. The functions of the components of the training coach 107 are described in more detail below with respect to FIGs. 3-7B.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular telecom network device, or other computing or network device. In another embodiment, one or more of the components of the training coach 107 may be implemented as a cloud-based service, local service, native application, or in any combination thereof.

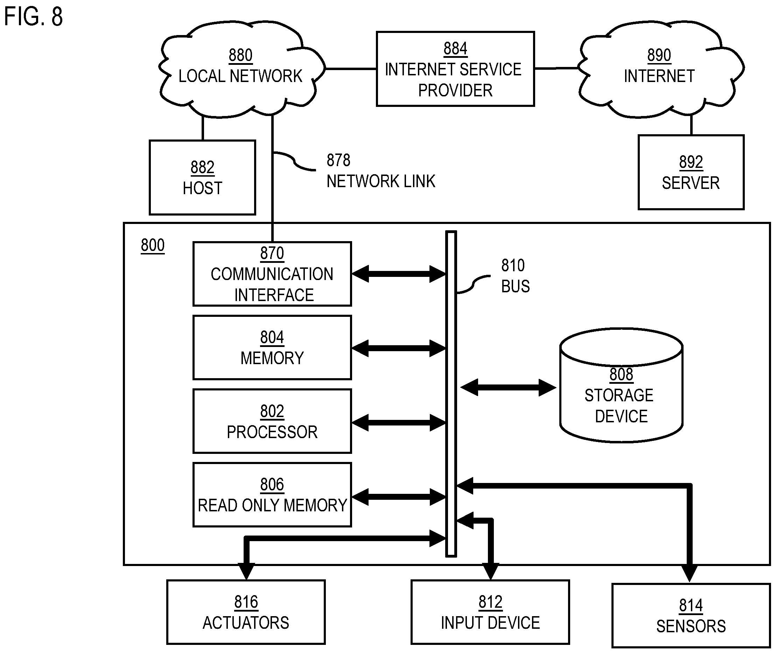

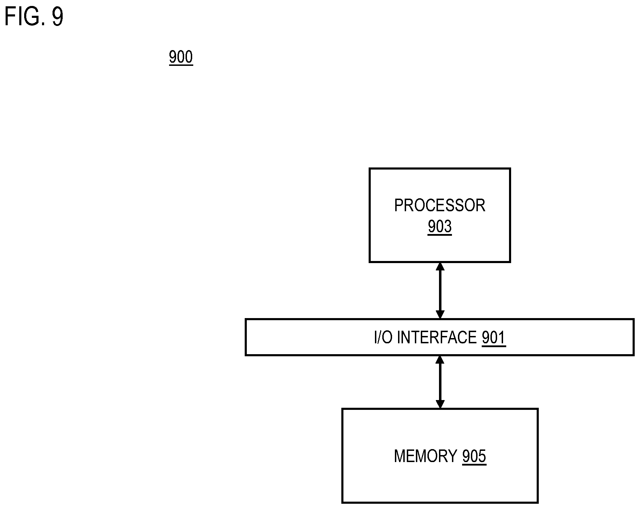

FIG. 3 is a flowchart of a process for providing symbiotic autonomous training of ML models, according to one example embodiment. In one example, the training coach 107 and/or any of its components/circuitry may perform one or more portions of a process 300 and may be implemented in/by various means, for instance, one or more chip sets including a processor and a memory as shown in FIGs. 8 or 9 or in a circuitry, hardware, firmware, software, or in any combination thereof. In one example embodiment, the circuitry includes but is not limited to any component discussed with respect to FIG. 2. As such, the training coach 107 and/or any associated component, apparatus, device, circuitry, system, computer program product, method, and/or non-transitory computer readable medium, or any combination thereof, can provide means for accomplishing various parts of the process 300, as well as means for accomplishing embodiments of other processes described herein. Although the process 300 is illustrated and described as a sequence of steps, it is contemplated that various embodiments of the process 300 may be performed in any order or combination and need not include all of the illustrated steps.

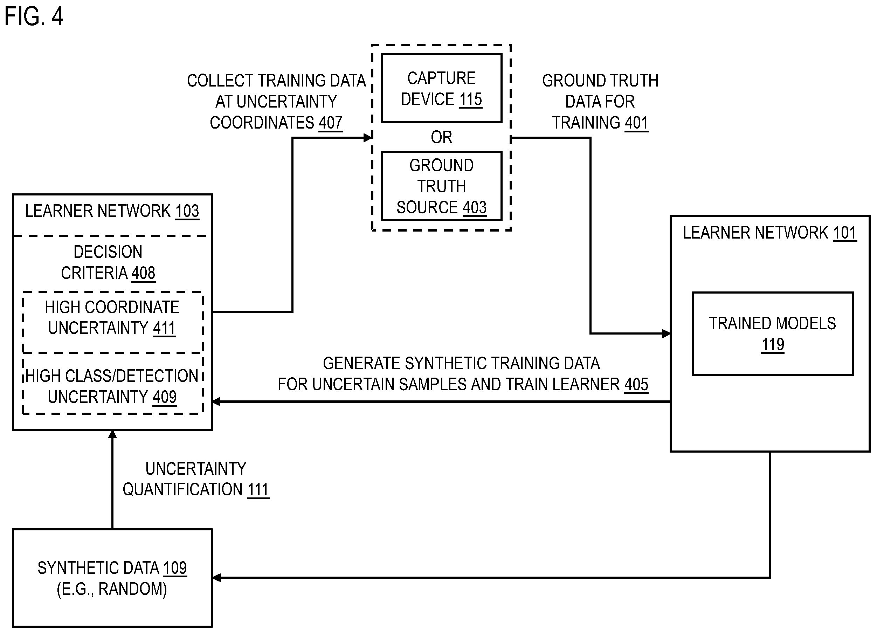

In one embodiment, the process 300 is performed based on the ML architecture described with respect to FIG. 1 above as well as with respect to FIG. 4 which is a diagram of an ML architecture for providing symbiotic autonomous training of ML models. As shown in FIGs. 1 and 4, the architecture includes: (1) the synthesizer network 101 (e.g., a data generator/synthesizer such as but not limited to NeRF, Gaussian splats, and/or any other data generator based on the type of data to be generated, such as imagery, audio, text, etc.); (2) the learner network 103 that is trained to perform any ML task based on the data generated from the synthesizer network 101; and (3) the training coach 107 that determines the symbiotic training interactions between the synthesizer network 101 and the learner network 103.

*The Synthesizer Network 101:* In one embodiment, the synthesizer network 101 is a neural network to implicitly represent a scene and can be used to render novel training samples depicting the scene (e.g., images from novel views which had not been seen during training). As previously described, it is contemplated that the synthesizer network 101 can use any type of data generation algorithm or process such as but not limited to NeRF and/or Gaussian splatting. For example, the synthesizer network 101 is trained to get as input a set of camera positions in the 3D space and a direction and outputs RGB values and a density function. The training data used to train the synthesizer network 101 image (e.g., ground truth data for training 401 ) can be collected from capture devices 115 (e.g., cameras) or otherwise queried/requested from any other ground truth source 403 (e.g., databases of labeled images, etc.). The input to the synthesizer network 101 can include five coordinates (*x, y, z, θ, φ*)*,* where (*x, y, z*) indicates the 3D position of the camera (or any other capture device 115) associated with the image or data, and (*θ*, *φ*) encodes the pointing direction of the camera or capture device 115. The RGB values and the density function are then combined with volumetric rendering techniques to render RGB values pixel-wise. The loss that guides the training process can be the square of *L*₂ norm of the difference between the rendered RGB values and true pixel values.

In some cases, however, the synthesizer network 101 (e.g., NeRF, Gaussian splatting, etc.) can suffer from artifacts in less controlled setups. Specifically, when training data (e.g., images) of the synthesizer network 101 have multiple resolutions, rendered images can be either blurry or contain aliasing artifacts. To address these artifacts, the training coach 107 creates a feedback loop that identifies angles for which there is not enough information available in the training phase. The training coach 107 can then use these angles for gathering more training images. This can have significant impact on the quality of the model.

*The learner network 103:* In one embodiment, the ML architecture includes the learner network 103 (e.g., a neural network). The learner network 103 can be any type of classifier that receives input data and identifies the class assigned to the input data (or detected object class) and coordinates associated with the capture of the input data or with any detected objects. For example, with respect to an image-based use case, the learner network 103 receives as input imagery data and outputs the class assigned to the image (or detected object class) and the coordinates from which the object was photographed. In one embodiment, the learner network 103 includes an active learning module (e.g., one or more layers of the learner network 103) that uses the learner network 103 to perform uncertainty quantification 111 by outputting the uncertainties associated with the class (or object detection) and the coordinates prediction. The uncertainty can be computed by various mechanism and probabilistic models.

*The training coach 107:* In one embodiment, the training coach 107 is a classifier that decides, based on applying one or more decision criteria 408 to the learner network 103's measurements (e.g., criteria based on uncertainty quantification, probability of prediction, measure of how far the synthetic input data is from other training data samples, closeness to a decision boundary, and/or the like) whether a given image should be used: (1) to activate the synthesizer network 101 to generate additional similar training samples (e.g., generate synthetic training data for uncertain samples and train the learner network 103 at process 405 such as in the case where there is high class/detection certainty 409), (2) to collect more images photographed from the given coordinates to further train the synthesizer network (e.g., collecting training data at uncertainty coordinates 407 such as in the case where there is high coordinate uncertainty 411), or (3) both.

In one embodiment, the synthesizer network 101 and the learner network 103 are in a symbiotic relationship. In turn, the synthesizer network 101 is trained based on ground truth classified by the learner network 103. Classified image data that is output from the learner network 103, for instance, is data that contains the predicted class, coordinates, and uncertainties of training images or samples generated by the synthesizer network 101 during training.

By way of example, synthetic training data 109 is artificially generated data that simulates the characteristics and features of real data, without requiring any actual data collection or annotation. Different classes can be generated by different models 121 of classes on which the synthesizer network 101 is trained. Synthetic training data 109 can be used to augment existing data sets or to create new ones for domains where real data is scarce or expensive. Synthetic training data 109 can also be tailored to specific scenarios or tasks, such as object detection, segmentation, or classification. By using synthetic training data 109, the system 100 can overcome some of the limitations and challenges of real data, such as noise, bias, privacy, and ethical issues. Synthetic training data 109 can also enable faster and more efficient training of machine learning models, especially for complex vision tasks that require high-quality and diverse data. In one embodiment, randomly generated synthetic training data 109 is generated by applying random transformations and variations to a base data set, such as changing the colors, shapes, sizes, orientations, positions, backgrounds, lighting, textures, or noise levels of the images or objects in the data set. Randomly generated synthetic training data 109 can help improve the generalization and robustness of machine learning models. Most importantly, for supervised learning, is that synthesized data is already labeled and does not require human effort.

Given the above architecture, in step 301 of process 300 of FIG. 3, during the process of training the learner network 103, the training coach 107 receives an output of the learner network 103, wherein the learner network 103 is configured to assign a predicted class of an object (or to detect an object) depicted in input data and predicted coordinates (e.g., the five coordinate parameters discussed above or any other equivalent coordinate parameters) from which the object was captured in the input data (or otherwise associated with the detected object such as the predicted location of the object in the input data). In one embodiment, as noted the output of the learner network 103 also comprises a predicted class uncertainty associated with the predicted class (or detected object) and a predicted coordinate uncertainty associated with the predicted coordinates. By way of example, the uncertainty of a predicted class output from a machine learning model is a measure of how confident the model is about its prediction. It can indicate how likely the model is to make a mistake or how much information the model is missing. The uncertainty can be useful for identifying ambiguous or noisy data, detecting out-of-distribution samples, improving calibration and robustness, and guiding active learning or data augmentation. The uncertainties, for instance, can be quantified based on the probability distribution over the classes in the output layer, where the probabilities indicate the learner model's confidence in each class.

In the case of training the learner network 103, the input data is synthetic input data generated using the synthesizer network 101 based on given coordinates or based on a random distribution. As noted above, in one example scenario, the input data is image data and wherein the given coordinates are coordinates from which a camera is used to capture the synthesized input data.

In step 303, the training coach 107 uses one or more decision criteria for initiating and directing autonomous training of both the learner network 103 and the synthesizer network 101. In one embodiment, the one or more decision criteria are based on a predicted class uncertainty associated with the predicted class, a predicted coordinate uncertainty associated with the predicted coordinates, or a combination thereof (e.g., referred to as uncertainty sampling). In other words, the predicted class/object detection uncertainties and/or predicted coordinates uncertainties that are output from the learner network 103 can be used as criteria for selectively activating additional training of the learner network 103 and/or collecting additional ground truth data for training the synthesizer network 101. For example, the training coach 107 uses the predicted uncertainties (e.g., class/object detection uncertainty and coordinate uncertainty) to automatically detect whether (1) the learner network 103 is untrained or poorly trained, thereby resulting in poor classification/detection outputs; or (2) the synthesizer network 101 is either untrained or poorly trained, thereby resulting in badly synthesized images for training the learner network 103. In one embodiment, the criteria for determining which of the two above options is detected can be based on using the predicted class uncertainty in tandem with the predicted coordinate uncertainty.

In addition or alternatively to uncertainty sample, the training coach 107 can apply any other equivalent decision criteria (e.g., criteria for selectively activating additional training of the learner network 103 and/or collecting additional ground truth data for training the synthesizer network 101) including but not limited to a probability of prediction, a measure of how far the synthetic input data is from other training data samples, a closeness to a decision boundary, or a combination thereof. In other words, the one or more decision criteria can be based on a predicted class uncertainty associated with the predicted class, a predicted coordinate uncertainty associated with the predicted coordinates, a probability of prediction, a measure of how far the synthetic input data is from other training data samples, a closeness to a decision boundary, or a combination thereof.

By way of example, a probability of prediction a neural network is a measure of how confident the network is in its output for a given input. It can be calculated by applying, for instance, a SoftMax function to the output layer of the network, which converts the output values into probabilities that sum up to one. The higher the probability of a certain class or label, the more likely the network thinks that the input belongs to that class or label. A probability of prediction can be used as a decision criterion for training or evaluating a neural network, as well as for selecting the best output among multiple possible outputs. For example, a network that predicts the object class and coordinates of an image can use the probability of prediction to determine whether it needs more training data or synthetic data for a certain class or viewpoint.

In another example, a measure of how far the synthetic input data is from other training data samples is a metric that quantifies the similarity or dissimilarity among the synthetic data generated by the synthesizer network 101 and/or the real data used for training the learner network 103. It can be based on, for example, statistical distance, feature distance, perceptual distance, or any other suitable measure. The purpose of this measure is to evaluate the quality and diversity of the synthetic data and to identify potential gaps or outliers in the data distribution. A high value of this measure indicates that the synthetic data is very different from other training examples, which may imply that the synthesizer network 101 needs more ground truth data to improve its synthesis performance. A low value of this measure indicates that the synthetic data is very similar to other training examples, which may imply that the synthesizer network 101 is producing realistic and relevant data for training the learner network. However, too low of a value may also indicate that the synthetic data is redundant or overfitted to the real data, which may reduce the generalization ability of the learner network 103. Therefore, an optimal value of this measure should balance between similarity and diversity of the synthetic data with respect to the real data. This measure can be used alone or in conjunction with other decision criteria.

As another example, closeness to a decision boundary is a measure of how close the input data is to the border between two or more classes or labels that are predicted by a neural network. It can be calculated by, for example, measuring the distance between the input data and the hyperplane that separates the classes or labels in the feature space of the network. The smaller the distance, the closer the input data is to the decision boundary. The purpose of this measure is to evaluate the confidence and accuracy of the network's prediction for a given input. A high value of this measure indicates that the input data is far from the decision boundary, which may imply that the network is confident and accurate in its prediction. A low value of this measure indicates that the input data is close to the decision boundary, which may imply that the network is uncertain and inaccurate in its prediction. This measure can be used alone or in conjunction with other decision criteria, such as probability of prediction, predicted class uncertainty, or predicted coordinate uncertainty.

One or more of the above decision criteria and/or equivalent decision criteria can be used to determine whether the synthesizer network 101 or the learner network 103 needs more training or data collection. For example, in step 305, if the first scenario (e.g., the learner network 103 is untrained or poorly trained) is detected from the application of the one or more decision criteria (e.g., based on the predicted class/object detection uncertainty being above a threshold uncertainty, and/or any other decision criteria) for a given input image of a particular class and capture viewpoint, then the training coach 107 is configured to determine that the learner network 103 needs more training from samples of the particular class and/or particular capture viewpoint. In the case of image processing, the synthesizer network 101, for instance, is automatically activated to generate more training images of the particular class or objects of the particular class within a threshold range of the coordinates of the camera location and pointing direction of the input image processed by the learner network 103 that resulted in the predicted uncertainties. The generated training images can then be used to train the learner network 103 to improve its classification/object detection performance for the class and viewpoint in question.

In one embodiment of uncertainty sampling, the criterion of a high predicted class/objection detection uncertainty can be further combined with a criterion of a low predicted coordinate uncertainty (e.g., below a threshold coordinate uncertainty) to provide additional confirmation that the learner network 103 needs additional training. This is because the low coordinate threshold uncertainty indicates that the synthesizer network 101 is generating synthetic training data with at least some useful information that is sufficient for the learner network 103 to achieve the observed low predicted coordinate uncertainty. Therefore, it is the learner network 103 that needs additional training to improve its classification performance instead of the synthesizer network 101 that needs additional training to improve its training data synthesis performance.

Conversely, in step 307, if the second scenario (e.g., the synthesizer network 101 is untrained or poorly trained) is detected from the application of the one or more decision criteria (e.g., based on the predicted coordinate uncertainty being above a threshold uncertainty, and/or possibly class uncertainty as well; and/or any other equivalent decision criteria) for a given input image of a particular class and capture viewpoint, the training coach 107 can initiate the collection of addition ground truth data that is similar in characteristics (e.g., depicts the same classes or objects from the same viewpoints). This additional ground truth data can then be used to train the synthesizer network 101 to improve its performance with respect to generating synthetic training data for the given class and/or viewpoint in question for training the learner network 103.

In optional step 309, the improved synthesizer network 101 (e.g., the synthesizer network 101 after training with the additional ground truth data) can be used to regenerate synthetic data 109. The quality of the regenerated synthetic data 109 can then be assessed by applying the one or more decision criteria previously described (e.g., measuring the uncertainties of the regenerated synthetic data 109, etc.) and iteratively returning step 303.

In one embodiment, the collection of the additional ground truth data can be part of a completely autonomous pipeline whereby the ground truth data is captured by a robotic device. For example, the robotic device can be equipped with a capture device 115 (e.g., a camera) and can be directed by, e.g., the training coach and/or the synthesizer network 101 to capture without human intervention the ground truth training samples (e.g., images) of the requested class or object and from the requested location and point direction.

For example, one but not exclusive way that a robotic device can be configured to capture ground truth images of a specified class or object from a specified location and pointing direction is as follows. The robotic device can receive instructions from the training coach 107, which determines the optimal class, location, and direction for collecting the additional ground truth data based on the predicted uncertainties of the learner network 103. The robotic device can then move to the specified location using its navigation system and sensors, and orient its capture device 115 (e.g., a camera) to point in the specified direction. The robotic device can then use its vision system and algorithms to detect and recognize the specified class or object in its field of view. If the specified class or object is identified, the robotic device can capture one or more images or samples of the class or object and send them as additional ground truth data for training the synthesizer network 101.

In summary, the training coach 107, based on the predicted class uncertainty, the predicted coordinate uncertainty, or a combination thereof, performs at least one of: (1) using the input data to activate the synthesizer network 101 to generate additional synthetic training data within the predicted class and within a threshold range of the given coordinates, wherein the learner network 103 is further trained on the additional synthetic training data; or (2) causing, at least in part, a collection of additional generator ground truth data from the given coordinates and/or given class, wherein the synthesizer network 101 is further trained on the additional generator ground truth data.

In one embodiment, the additional synthetic training data is generated based on (1) determining that the predicted class uncertainty is either greater than a class uncertainty threshold or within a top-k most uncertain (where k is any designated number), and (2) determining that the predicted coordinate of the synthetic input data that triggered the synthesizer network or the collection of the additional generator ground truth data uncertainty is either less than a coordinate uncertainty threshold or within a top-k least uncertain (where k is any designated number). In one embodiment, the additional synthetic training data is iteratively generated (e.g., by the synthesizer network 101) and the learner network 103 is iteratively trained on the additional synthetic training data until the predicted class uncertainty is less than the class uncertainty threshold.

In one embodiment, the collection of the additional generator ground truth data is based on determining that the predicted coordinate uncertainty is greater than a coordinate uncertainty threshold. Similarly, the additional generator ground truth data is iteratively generated or collected and the synthesizer network 101 is iteratively trained on the additional generator ground truth data until the predicted coordinate uncertainty is less than the coordinate uncertainty threshold.

In one embodiment, the training coach 107 can be implemented as an independent classifier network or alternatively as a layer of either the learner network 103 or synthesizer network 101. Accordingly, as the process of generating training samples by the synthesizer network 101 and feeding it into the learner network 103 for training proceeds, the improvement in the training coach 107's ability to decide which images to ask for generation and which ones should be collected for better synthesizer training also improves.

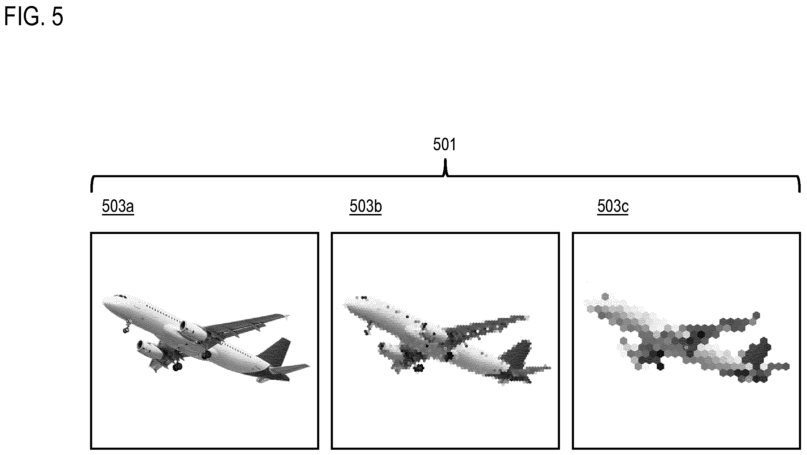

FIG. 5 is a diagram of example images for providing symbiotic autonomous training of ML models, according to one example embodiment. In one embodiment, the dataset 501 of FIG. 5 comprises three images 503a-503c depicting the same scene (e.g., depicting an airplane in flight) with different levels of image distortion. This dataset 501 can be used to test the system 100's ability to detect badly synthesized images due to an untrained synthesizer network 101 versus images that the need to be synthesized to better train the learner network 103. Using the learner network 103 to predict the coordinates of the camera angle of the images 503a-503b enables the determination of good quality images from poor quality (distorted) images. The test is even if the image is difficult for the learner network 103 to classify (e.g., predicted class uncertainty above a threshold uncertainty), it may still be good quality, and thus the learner network 103 should still be able to predict the coordinates easily (e.g., with predicted coordinate uncertainty below a threshold uncertainty). However, using classification uncertainty alone would show the images with distortion as being a poor sample. Conversely, poorly generated samples will have high classification uncertainty and high coordinate prediction uncertainty as there is no useful information in the image. Accordingly, there is a significant difference in the uncertainty of coordinates prediction versus uncertainty in class prediction that can allow the training coach 107 to determine which actions should be taken: synthesis of additional similar images for training the learner network 103, and/or additional data-collection and training of the synthesizer network 101 at the given coordinates and/or class.

In summary, the various embodiments described herein enables use of the synthesizer network 101 and at the same time improve the learner network 103 using active learning criteria. In one use case, this mechanism will allow robots to efficiently build digital twins and to train AI to act in them.

In one embodiment, the system 100 also provides for remediation of wrong classifications and/or object detections and detection of new classes and/or objects. For example, in case a detection is wrong, a remediation can be done if other classification/detection results of the same object in other samples (e.g., images) are different. Specifically, if, for a coordinate vector *vᵢ* of object x, the assignment (e.g., classification result from the learner network 103) is *c*₁, and for the same object x taken from locations *v*₂ ... *vₖ,* the assignment is *c*₂, then a majority vote can flip the assignment from *c*₁ to *c*₂*.* It is noted that majority vote is provided by way of illustration and not as limitations, it is contemplated that any other equivalent process or mechanism to reconcile different between classifications across different views can be used according to the various embodiments described herein.

In one embodiment, this remediation is an iterative process of label assessment and may include detection of new objects in camera photos taken, e.g., during the collection of new ground truth data. In this case, large vision models (LVMs) can be used to observe new classes, and correct existing wrong classifications as discussed previously. Detections of new classes or objects can also trigger training of new synthesis models of the synthesizer network 101 for those new classes or objects. It also triggers any necessary changes to the synthesizer network 101 to accommodate the new class in the set of possible predicted classes of 101.

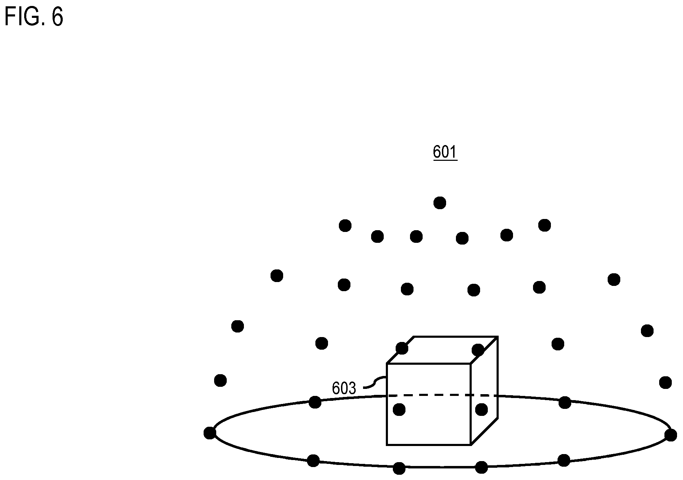

FIG. 6 is a diagram of example coordinates for capturing samples for providing symbiotic autonomous training of ML models, according to one example embodiment. In one embodiment, the synthesizer network 101 can generate training data from any requested viewpoint (e.g., camera position and/or point direction in the case of synthesized imagery). As shown example 601, a 3D object 603 is positioned within a three dimensional scene. Each black dot surrounding the object 603 represents a camera position from which the synthesizer network 101 can generate training images of the object 603. In this way, images from of the object 603 can be synthesized from any requested perspective to provide for greater viewpoint diversity as well as for targeting particular viewpoints that maybe more difficult for the learner network 103 to classify for additional training.

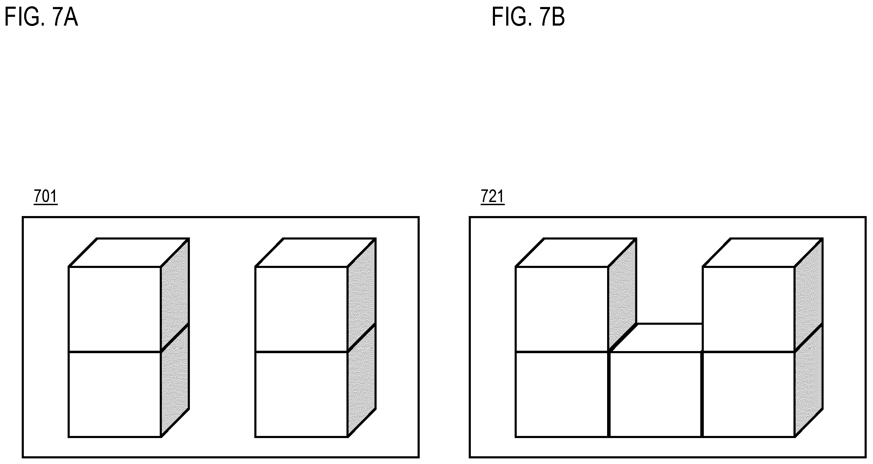

FIGs. 7A and 7B are diagrams of example training images for training an ML model for image classification, according to one example embodiment. In the example of FIGs. 7A and 7B, the learner network 103 has difficulty distinguishing between a 4-pack of boxes as shown in image 701 of FIG. 7A and a 5-pack of boxes as shown in image 721 of FIG. 7B. This is detected by the training coach as high classification uncertainties (e.g., above a threshold classification uncertainty) for the class labeled as "4-pack of boxes" and as the class labeled as "5-pack of boxes" when each class is viewed from the front perspective, while the predicted coordinate uncertainties of each class is below a threshold coordinate uncertainty. Based on the predicted uncertainties, the training coach 107 determines that additional training data of depicting the "4-pack of boxes" class and the "5-pack of boxes" from the front perspective should be generated. Accordingly, the training coach 107 activates the synthesizer network to generate additional synthetic training data depicting the two classes of boxes from the front perspective under different lighting, texture, and/or other conditions. These additional training samples are automatically used to train the learner network 103 to improve its classification performance for the two classes. In this way, the system 100 advantageously generates only those training images that are most needed by the learner network 103 to improve, thereby reducing compute resource requirements used for just randomly generating training data.

Returning to FIG. 1, in one example, the components of the system 100 may communicate over one or more communications networks 129 that includes one or more networks such as a data network, a wireless network, a telephony network, or any combination thereof. It is contemplated that the communications network 129 may be any local area network (LAN), metropolitan area network (MAN), wide area network (WAN), a public data network (e.g., the Internet), short range wireless communications network, or any other suitable packet-switched network, such as a commercially owned, proprietary packet-switched network, e.g., a proprietary cable or fiber-optic network, and the like, or any combination thereof. In addition, the communications network 129 may be, for example, a cellular telecom network and may employ various technologies including enhanced data rates for global evolution (EDGE), general packet radio service (GPRS), global system for mobile communications (GSM), Internet protocol multimedia subsystem (IMS), universal mobile telecommunications system (UMTS), worldwide interoperability for microwave access (WiMAX), Long Term Evolution (LTE) networks, 5G/3GPP (fifth-generation technology standard for broadband cellular networks / 3^{rd} Generation Partnership Project) or any further generation, code division multiple access (CDMA), wideband code division multiple access (WCDMA), wireless fidelity (Wi-Fi), wireless LAN (WLAN), Bluetooth^{®}, UWB (Ultra-wideband), Internet Protocol (IP) data casting, satellite, mobile ad-hoc network (MANET), and the like, or any combination thereof.

In one example, the system 100 or any of its components may be a platform with multiple interconnected components (e.g., a distributed framework). The system 100 and/or any of its components may include multiple servers, intelligent networking devices, computing devices, components, and corresponding software for spatial-temporal authentication. In addition, it is noted that the system 100 or any of its components may be a separate entity, a part of the one or more services, a part of a services platform, or included within other devices, or divided between any other components.

By way of example, the components of the system 100 can communicate with each other and other components external to the system 100 using well known, new or still developing protocols. In this context, a protocol includes a set of rules defining how the network nodes, e.g. the components of the system 100, within the communications network interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically affected by exchanging discrete packets of data. The packets typically comprise (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

The processes described herein for providing symbiotic autonomous training of ML models may be advantageously implemented via software, hardware (e.g., general processor, memory, input/output interface, etc.), firmware, circuitry, or a combination thereof. Such exemplary hardware for performing the described functions is detailed below.

FIG. 8 illustrates an example computer system 800 upon which embodiments of the invention as described with the processes described herein may be implemented. The computer system 800 is programmed (e.g., via computer program code or instructions) to provide symbiotic autonomous training of ML models as described herein and includes a communication mechanism such as a bus 810 for passing information between other internal and external components of the computer system 800. Information (also called data) is represented as a physical expression of a measurable phenomenon, typically electric voltages, but including, in other embodiments, such phenomena as magnetic, electromagnetic, pressure, chemical, biological, molecular, atomic, subatomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 810 includes one or more parallel conductors of information so that information is transferred quickly among devices coupled to the bus 810. One or more processors 802 for processing information are coupled with the bus 810.

A processor 802 performs a set of operations on information as specified by computer program code related to providing symbiotic autonomous training of ML models. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations includes bringing information in from the bus 810 and placing information on the bus 810. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 802, such as a sequence of operation codes, constitute processor instructions, also called computer system instructions or, simply, computer instructions. Processors may be implemented as mechanical, electrical, magnetic, optical, chemical or quantum components, among others, alone or in combination.

The computer system 800 also includes a memory 804 coupled to bus 810. The memory 804, such as a random access memory (RAM) or other dynamic storage device, stores information including processor instructions for providing symbiotic autonomous training of ML models. Dynamic memory allows information stored therein to be changed by the computer system 800. RAM allows a unit of information stored at a location called a memory address to be stored and retrieved independently of information at neighboring addresses. The memory 804 is also used by the processor 802 to store temporary values during execution of processor instructions. The computer system 800 also includes a read only memory (ROM) 806 or other static storage device coupled to the bus 810 for storing static information, including instructions, that is not changed by the computer system 800. Some memory is composed of volatile storage that loses the information stored thereon when power is lost. Also coupled to bus 810 is a non-volatile (persistent) storage device 808, such as a magnetic disk, optical disk or flash card, for storing information, including instructions, that persists even when the computer system 800 is turned off or otherwise loses power.

Information, including instructions for providing symbiotic autonomous training of ML models, is provided to the bus 810 for use by the processor from an external input device 812, such as a keyboard containing alphanumeric keys operated by a human user, or one or more sensors. In one embodiment, the computer system 800 includes or otherwise has access to one or more sensors 814 which detect conditions in its vicinity and transforms those detections into physical expression compatible with the measurable phenomenon used to represent information in the computer system 800. Examples of sensors 814 include but are not limited to cameras, Lidar, positioning sensors, gyroscopes, accelerometers, and/or the like. Other external devices coupled to bus 810, include one or more actuators 816. By way of example, an actuator is a device that converts electrical signals (e.g., control signals) into physical actions, such as movement, rotation, or force. In a mobile robot or equivalent drivetrain, an actuator 816 can be used to control the wheels that enable the robot to perform various maneuvers. For example, an actuator 816 can regulate the speed and direction of the wheels. Actuators 816 can be powered by different sources, such as but not limited to electricity, pneumatic pressure, or hydraulic fluid. Some examples of actuators 816 include but are not limited to motors, solenoids, cylinders, and servos. In some embodiments, for example, in embodiments in which the computer system 800 performs all functions automatically without human input, one or more of external input device 812, display device 814 and pointing device 816 is omitted. In various embodiments, the computer system 800 is further connected via the bus 810 to a one or more camera device, flash device or Lidar device.

Computer system 800 also includes one or more instances of a communications interface 870 coupled to bus 810. Communication interface 870 provides a one-way or two-way communication coupling to a variety of external devices that operate with their own processors, such as printers, scanners and external disks. In general, the coupling is with a network link 878 that is connected to a local network 880 to which a variety of external devices with their own processors are connected. In certain embodiments, the communications interface 870 enables connection to the communications network 129 for providing symbiotic autonomous training of ML models.

The term computer-readable medium is used herein to refer to any medium that participates in providing information to processor 802, including instructions for execution. Such a medium may take many forms, including, but not limited to, non-volatile media, volatile media and transmission media. Non-volatile media include, for example, optical or magnetic disks, such as storage device 808. Volatile media include, for example, dynamic memory 804. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, any solid state medium, any magnetic medium, any optical medium, any physical medium, a RAM, any other memory chip, a carrier wave, or any other medium from which a computer can read.

Network link 878 typically provides information communication using transmission media through one or more networks to other devices that use or process the information. For example, network link 878 may provide a connection through local network 880 to a host computer 882 or to equipment 884 operated by an Internet Service Provider (ISP). ISP equipment 884 in turn provides data communication services through the public, world-wide packet-switching communications network of networks now commonly referred to as the Internet 890.

A computer called a server host 892 connected to the Internet hosts a process that provides a service in response to information received over the Internet. For example, server host 892 hosts a process that provides information representing video data for presentation at display 814. It is contemplated that the components of the system 100 can be deployed in various configurations within other computer systems, e.g., host 882 and server 892.

FIG. 9 illustrates a chip set 900 upon which embodiments of the invention, for example, the components of system 100 may be implemented. The chip set 900 is programmed to provide symbiotic autonomous training of ML models as described herein and includes, for instance, the processor and memory components described with respect to FIG. 2 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 900 includes a communication mechanism such as a input/output (I/O) interface 901 for passing information among the components of the chip set 900 and to external devices (e.g., sensors and/or actuators of a robot, transmitters/receivers for signaling a vehicle/robot/drivetrain or component thereof, etc.). A processor 903 has connectivity to the bus 901 to execute instructions and process information stored in, for example, a memory 905. The processor 903 may include one or more processing cores with each core configured to perform independently. A multi-core processor enables multiprocessing within a single physical package. Examples of a multi-core processor include two, four, eight, or greater numbers of processing cores. Alternatively or in addition, the processor 903 may include one or more microprocessors configured in tandem via the bus 901 to enable independent execution of instructions, pipelining, and multithreading. Other specialized components to aid in performing the inventive functions described herein include one or more field programmable gate arrays (FPGA) (not shown), one or more controllers (not shown), or one or more other special-purpose computer chips.

The processor 903 and accompanying components have connectivity to the memory 905 via the I/O interface 901. The memory 905 includes both dynamic memory (e.g., RAM, magnetic disk, writable optical disk, etc.) and static memory (e.g., ROM, CD-ROM, etc.) for storing executable instructions that when executed perform the inventive steps described herein to provide symbiotic autonomous training of ML models. The memory 905 also stores the data associated with or generated by the execution of the inventive steps.

## Claims

1. An apparatus comprising:
means for receiving an output of a learner network, wherein the learner network is configured to assign a predicted class of an object depicted in input data and predicted coordinates from which the object was captured in the input data, wherein the input data is synthetic input data generated using a synthesizer network based on given coordinates; and
means for, based on one or more decision criteria, performing at least one of:
(1) using the input data to activate the synthesizer network to generate additional synthetic training data within the predicted class and within a threshold range of the given coordinates, wherein the learner network is further trained on the additional synthetic training data; or
(2) causing, at least in part, a collection of additional generator ground truth data from the given coordinates, wherein the synthesizer network is further trained on the additional generator ground truth data.

2. The apparatus of claim 1, wherein the one or more decision criteria are based on a probability of prediction, a measure of how far the synthetic input data is from other training data samples, a closeness to a decision boundary, or a combination thereof.

3. The apparatus of claim 1, wherein the one or more decision criteria are based on a predicted class uncertainty associated with the predicted class, a predicted coordinate uncertainty associated with the predicted coordinates, or a combination thereof.

4. The apparatus of claim 3, wherein the additional synthetic training data is iteratively generated and the learner network is iteratively trained on the additional synthetic training data until the predicted class uncertainty, the predicted coordinate uncertainty, or a combination thereof is less than a first uncertainty threshold.

5. The apparatus according to any of claims 2-4, wherein the collection of the additional generator ground truth data is based on determining that the predicted coordinate uncertainty, the predicted class uncertainty, or a combination thereof is greater than a second uncertainty threshold.

6. The apparatus of claim 5, wherein the additional generator ground truth data is iteratively generated and the synthesizer network is iteratively trained on the additional generator ground truth data until the predicted coordinate uncertainty, the predicted class uncertainty, or a combination thereof is less than the second uncertainty threshold.

7. The apparatus according to any of claims 1-6, wherein the learner network is trained based on previous synthetic training data randomly generated by the synthesizer network for one or more classes predicted by the learner network.

8. The apparatus according to any of claims 1-7, wherein the synthesizer network is an image synthesizer.

9. The apparatus according to any of claims 1-8, wherein the synthesizer network is a Neural Radiance Fields (NeRF) model, Gaussian Splats model, or a combination thereof.

10. The apparatus according to any of claims 1-9, wherein the input data is image data and wherein the given coordinates are coordinates from which a camera is synthesized to capture the input data.

11. The apparatus according to any of claims 1-10, wherein the collection of the additional generator ground truth data is performed using a robotic device.

12. A computer-implemented method comprising:
receiving an output of a learner network, wherein the learner network is configured to assign a predicted class of an object depicted in input data and predicted coordinates from which the object was captured in the input data, wherein the input data is synthetic input data generated using a synthesizer network based on given coordinates; and
based on one or more decision criteria, performing at least one of:
(1) using the input data to activate the synthesizer network to generate additional synthetic training data within the predicted class and within a threshold range of the given coordinates, wherein the learner network is further trained on the additional synthetic training data; or
(2) causing, at least in part, a collection of additional generator ground truth data from the given coordinates, wherein the synthesizer network is further trained on the additional generator ground truth data.

13. The computer-implemented method of claim 12, wherein the one or more decision criteria are based on a predicted class uncertainty associated with the predicted class, a predicted coordinate uncertainty associated with the predicted coordinates, a probability of prediction, a measure of how far the synthetic input data is from other training data samples, a closeness to a decision boundary, or a combination thereof.

14. The computer-implemented method of claim 12, wherein the one or more decision criteria are based on a predicted class uncertainty associated with the predicted class, a predicted coordinate uncertainty associated with the predicted coordinates, or a combination thereof.

15. The computer-implemented method of claim 12, wherein the additional synthetic training data is iteratively generated and the learner network is iteratively trained on the additional synthetic training data until the predicted class uncertainty, the predicted coordinate uncertainty, or a combination thereof is less than a first uncertainty threshold.

## Amended claims

### Amended claims in accordance with Rule 137(2) EPC.

1. An apparatus comprising:
means for receiving an output of a learner network (103), wherein the learner network (103) is configured to assign a predicted class of an object depicted in input data (109) and predicted coordinates from which the object was captured in the input data (109), wherein the input data (109) is synthetic input data generated using a synthesizer network (101) based on given coordinates; and
means for, based on one or more decision criteria, performing at least one of:
(1) using the input data to activate the synthesizer network (101) to generate additional synthetic training data within the predicted class and within a threshold range of the given coordinates, wherein the learner network (103) is further trained on the additional synthetic training data; or
(2) causing, at least in part, a collection of additional generator ground truth data (113) from the given coordinates, wherein the synthesizer network (101) is further trained on the additional generator ground truth data (113).

2. The apparatus of claim 1, wherein the one or more decision criteria are based on a probability of prediction, a measure of how far the synthetic input data is from other training data samples, a closeness to a decision boundary, or a combination thereof.

3. The apparatus of claim 1, wherein the one or more decision criteria are based on a predicted class uncertainty associated with the predicted class, a predicted coordinate uncertainty associated with the predicted coordinates, or a combination thereof.

4. The apparatus of claim 3, wherein the additional synthetic training data is iteratively generated and the learner network is iteratively trained on the additional synthetic training data until the predicted class uncertainty, the predicted coordinate uncertainty, or a combination thereof is less than a first uncertainty threshold.

5. The apparatus according to any of claims 2-4, wherein the collection of the additional generator ground truth data is based on determining that the predicted coordinate uncertainty, the predicted class uncertainty, or a combination thereof is greater than a second uncertainty threshold.

6. The apparatus of claim 5, wherein the additional generator ground truth data is iteratively generated and the synthesizer network is iteratively trained on the additional generator ground truth data until the predicted coordinate uncertainty, the predicted class uncertainty, or a combination thereof is less than the second uncertainty threshold.

7. The apparatus according to any of claims 1-6, wherein the learner network is trained based on previous synthetic training data randomly generated by the synthesizer network for one or more classes predicted by the learner network.

8. The apparatus according to any of claims 1-7, wherein the synthesizer network is an image synthesizer.

9. The apparatus according to any of claims 1-8, wherein the synthesizer network is a Neural Radiance Fields (NeRF) model, Gaussian Splats model, or a combination thereof.

10. The apparatus according to any of claims 1-9, wherein the input data is image data and wherein the given coordinates are coordinates from which a camera is synthesized to capture the input data.

11. The apparatus according to any of claims 1-10, wherein the collection of the additional generator ground truth data is performed using a robotic device.

12. A computer-implemented method comprising:
receiving an output of a learner network (103), wherein the learner network (103) is configured to assign a predicted class of an object depicted in input data (109) and predicted coordinates from which the object was captured in the input data (109), wherein the input data (109) is synthetic input data generated using a synthesizer network (101) based on given coordinates; and
based on one or more decision criteria, performing at least one of:
(1) using the input data (109) to activate the synthesizer network (101) to generate additional synthetic training data within the predicted class and within a threshold range of the given coordinates, wherein the learner network (103) is further trained on the additional synthetic training data; or
(2) causing, at least in part, a collection of additional generator ground truth data (113) from the given coordinates, wherein the synthesizer network (101) is further trained on the additional generator ground truth data (113).

13. The computer-implemented method of claim 12, wherein the one or more decision criteria are based on a predicted class uncertainty associated with the predicted class, a predicted coordinate uncertainty associated with the predicted coordinates, a probability of prediction, a measure of how far the synthetic input data is from other training data samples, a closeness to a decision boundary, or a combination thereof.

14. The computer-implemented method of claim 12, wherein the one or more decision criteria are based on a predicted class uncertainty associated with the predicted class, a predicted coordinate uncertainty associated with the predicted coordinates, or a combination thereof.

15. The computer-implemented method of claim 12, wherein the additional synthetic training data is iteratively generated and the learner network is iteratively trained on the additional synthetic training data until the predicted class uncertainty, the predicted coordinate uncertainty, or a combination thereof is less than a first uncertainty threshold.
